# EUROPEAN PATENT APPLICATION

(11) **EP 2 031 478 A1**
(43) Date of publication of application: **04.03.2009**
(21) Application number: 07017092.3
(22) Date of filing: 31.08.2007
(51) Int. Cl.: G06F 1/20

(54) **Heat dissipating apparatus of computer**

(71) Applicant: Silver-Stone Technology Co., Ltd., Jhonghe City 235 Taipei County (TW)
(72) Inventor: Chi, Yen-Shu, Jhonghe City 235 Taipei County (R.O.C.) (TW)
(74) Representative: Zeitler, Giselher

(57) **Abstract**

A heat dissipating apparatus applied in a tower computer includes a housing (10), and the housing includes a motherboard (30), a storage device (20) and a fixing frame (50). Electronic components and interface cards (31) are installed on the motherboard (30) and storage devices are installed in a frame body (12). The fixing frame (50) has a fan (60) at a position opposite to the motherboard (30) and the storage device (20), so that the airflow direction of the fan (60) is parallel to the interface cards (31). The housing further includes an external port (70) on a corresponding surface away from the standing position of the housing, and a hood (80) covered onto the corresponding opposite surface, such that the fan (60) blows air in a single direction directly at the heat generating components. The outside cold air is sucked directly into the crevice at the bottom of the housing by a positive wind pressure difference to reduce dusts from entering the housing (10) through other crevices.

## Description

### BACKGROUND OF THE INVENTION

### Field of the Invention

The present invention relates to a heat dissipating apparatus of a computer, and more particularly to a heat dissipating apparatus that sucks outside cold air directly from a crevice proximate to the bottom of a housing to blow a heat generating component in a single direction, so as to reduce dusts from entering into the housing through other crevices of the housing.

### Description of the Related Art

Computer is a popular equipment, but general computer users usually have a common problem which is also a general problem for computer manufacturers, not only the speed of a computer processor becomes faster, but corresponding display cards and other components also becomes more complicated, and the required capacity of a data storage device (such as a hard disk) becomes larger increasingly. The data storage capacity ranges from tens of gigabytes (GB) to hundreds of GB, and thus if a single piece of storage device no longer can provide a sufficiently high capacity, then it is necessary to connect several storage devices in series or in parallel to increase the data storage capacity, and the storage devices produce a high temperature which may cause a computer breakdown easily. Obviously, the issue of dissipating the heat produced in a computer demands immediate attentions and feasible solutions.

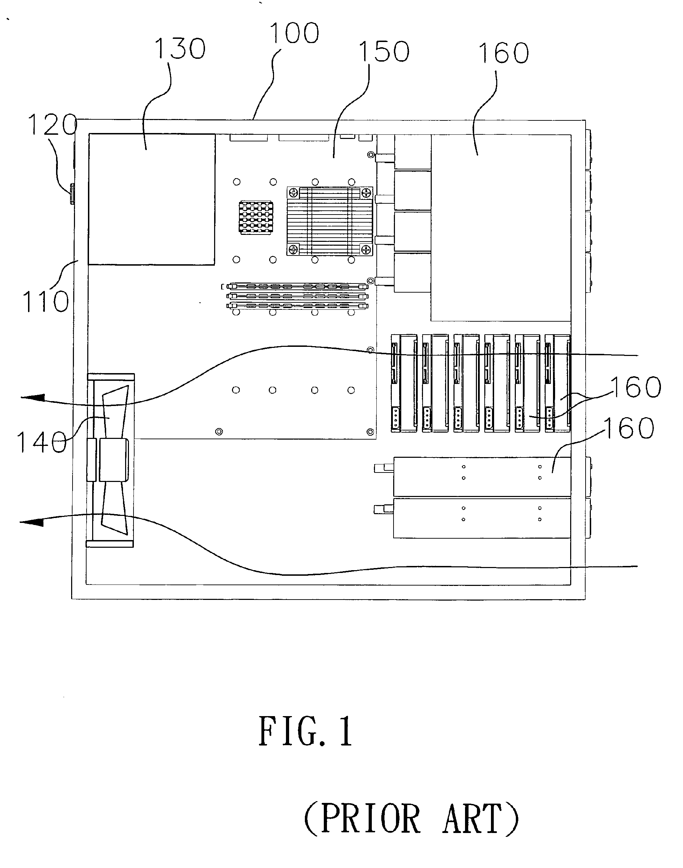

Referring to FIG. 1 for a tower housing 100, the housing 100 includes a rear panel 110 disposed at a rear end of the housing 100, and the rear panel 110 has a plurality of ports 120 with different functions, and the housing 100 has a power supply device 130 and a fan 140 disposed adjacent with each other at positions proximate to the rear panel 110, and the housing 100 has a motherboard 150 installed on a lateral side of the housing 100. The housing 100 further includes a storage device 160 installed at a front end of the housing 100, and the storage device 160 is a hard disk or an optical disk such that when the fan 140 starts operating, the heat source in the housing 100 is dissipated to the outside (by means of a negative wind pressure difference), and outside cold air enters from a crevice of the housing 100 into the housing 100 and flows through the components on the motherboard 150 and the storage device 160 in the housing 100, but such arrangement still has the following drawbacks:
1. If outside cold air enters into the crevice of the housing 100 and flows through a heat generating component on the motherboard 150 and a storage device 160 in the housing 100, tiny dusts will be attached onto the components, not only increasing the chances of a failure of components and lowering the life of components, but also blocking the airflow and making the heat dissipation difficult.
2. Since the housing 100 adopts a vertical tower design, the heat generating components on the motherboard 150 are perpendicular to the airflow produced by the fan 140, and the cold air cannot enter into some of the heat generating components directly, and the heat produced by the heat generating components remains in the housing 100.
3. Since the external port 120 of a conventional computer is installed on the rear panel 110, and the rear panel 110 generally abuts a wall or a desk, therefore the installation and removal are very inconvenient. If the housing is placed at an obvious place, then the appearance will not be good looking.

### Summary of the Invention

In view of the shortcomings of the prior art, the inventor of the present invention based on years of experience in the related industry to conduct extensive researches and experiments, and finally developed a heat dissipating apparatus of a computer in accordance with the present invention to overcome the aforementioned shortcomings.

Therefore, it is a primary objective of the present invention to provide a heat dissipating apparatus of a computer for dissipating the heat produced in a computer system, and the apparatus has a housing, which is a tower housing, and the housing has a motherboard installed on a lateral side of the housing, and the motherboard has electronic components and interface cards installed thereon, and the front end of the housing has a front panel and a storage device installed proximate to the front panel. The housing further includes a fixing frame installed at a position opposite to the motherboard and the storage device, and the fixing frame has at least one fan, and the airflow direction of the fan is parallel to the direction of arranging the interface cards, so that when the fan starts operating, the air blows directly at a heat source without encountering an obstacle to enhance the heat dissipating effect.

Another objective of the present invention is to provide a heat dissipating apparatus of a computer, such that when the fan starts operating, outside cold air is sucked from a crevice proximate to the bottom of the housing, such that the cold air at a lower temperature at the bottom is blown directly at the heat generating components and storage devices, so as to achieve the effects of preventing dusts from entering into the housing from other crevices, extending the life of components and enhance the heat dissipating effect.

A further objective of the present invention is to provide a heat dissipating apparatus of a computer, wherein the housing includes an external port disposed on a corresponding surface away from the standing position and protruded and exposed from the housing, a hood covered thereon, and a passage formed between the hood and the housing, wherein an end of the hood has an opening. Such arrangement not only facilitates users for the installation and removal and protects the external port by the hood, but also guides the airflow of the housing from the opening to the outside to assure a smooth convection.

To make it easier for our examiner to understand the objective of the invention, its structure, innovative features, and performance, we use preferred embodiments together with the attached drawings for the detailed description of the invention.

### BRIEF DESCRIPTION OF THE DRAWINGS

FIG. 1 is a schematic view of a conventional apparatus;
FIG. 2 is an exploded view of the present invention;
FIG. 3 is a section view of the present invention;
FIG. 4 is a section view of airflow movements of the present invention; and
FIG. 5 is a section view of another preferred embodiment of the present invention.

### DETAILED DESCRIPTION OF THE PREFERRED EMBODIMENTS

In the related figures of preferred embodiments of a drawer fixing apparatus of the present invention, the same referring numerals are used for the same components in accordance with the present invention.

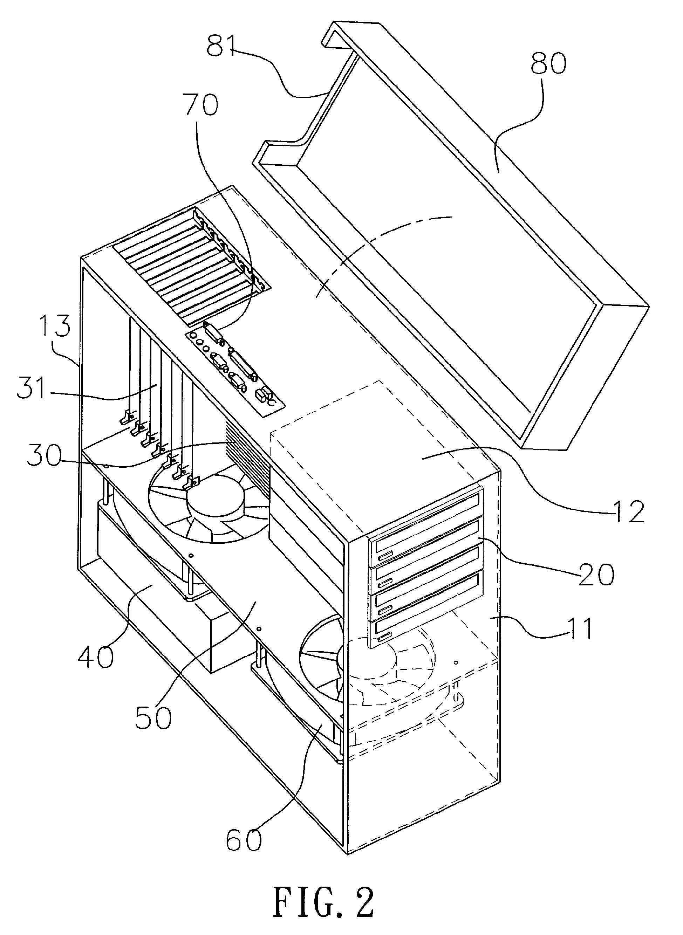

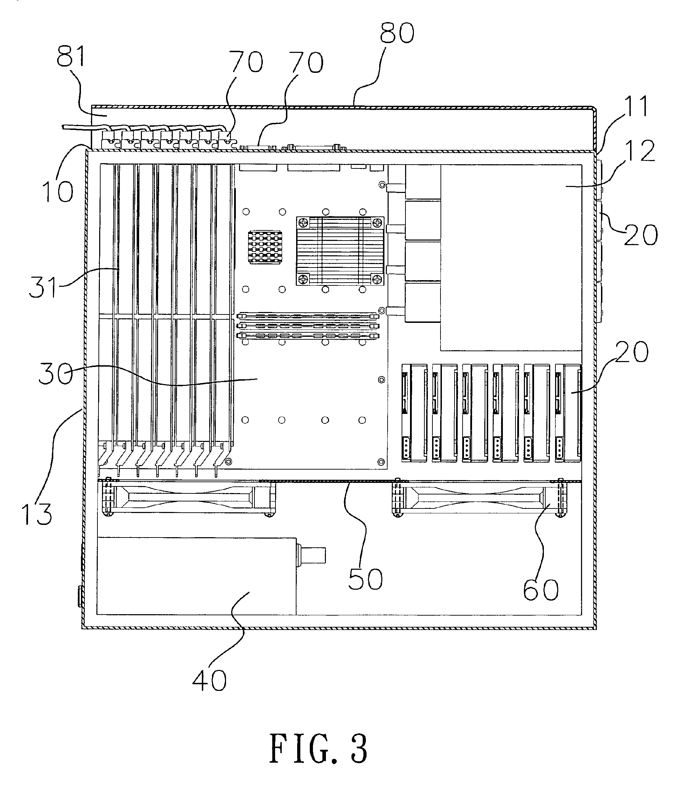

Referring to FIGS. 2 and 3 for a heat dissipating apparatus of a computer, the apparatus comprises: a housing 10 (a tower desktop computer in this embodiment), a front panel 11 disposed at a front side of the housing 10, a frame body 12 disposed proximate to the front panel 11, a plurality of storage devices 20 (optical disk drives and/or hard disk drives in this embodiment) and installed in the frame body 12, a rear panel 13 disposed at a rear side of the housing 10, a motherboard 30 installed at a lateral side of the housing 10 and between the front panel 11 and the rear panel 13, an electronic component such as a microprocessor (CPU) installed on the motherboard 30, and a plurality of interface cards 31 (such as display cards) installed on the motherboard 30 and parallel to the front panel 11.

Referring to FIGS. 2 and 3, the housing 10 has a power supply device 40 installed at a vertical standing position proximate to the rear panel 13, and a fixing frame 50 installed at a position opposite to the motherboard 30 and the storage device 20 and fixed in the housing 10 by welding, locking or insertion. The fixing frame 50 installs at least one fan 60, and this embodiment adopts two fans 60 installed side by side with each other, and the airflow direction of the fan 60 is parallel to the direction of arranging the interface cards 31.

In FIGS. 2 and 3, the housing 10 has an external port 70 disposed on a corresponding surface away from the standing position (which is the top of the housing in this embodiment) and protruded and exposed from the housing 10, a hood 80 covered thereon, a passage formed between the hood 80 and the housing 10, and an opening 81 disposed at an end of the hood, such that the external port 70 can be installed at an easy-to-reach position to facilitate users for its installation and removal, and the external port 70 is protected by the hood 80.

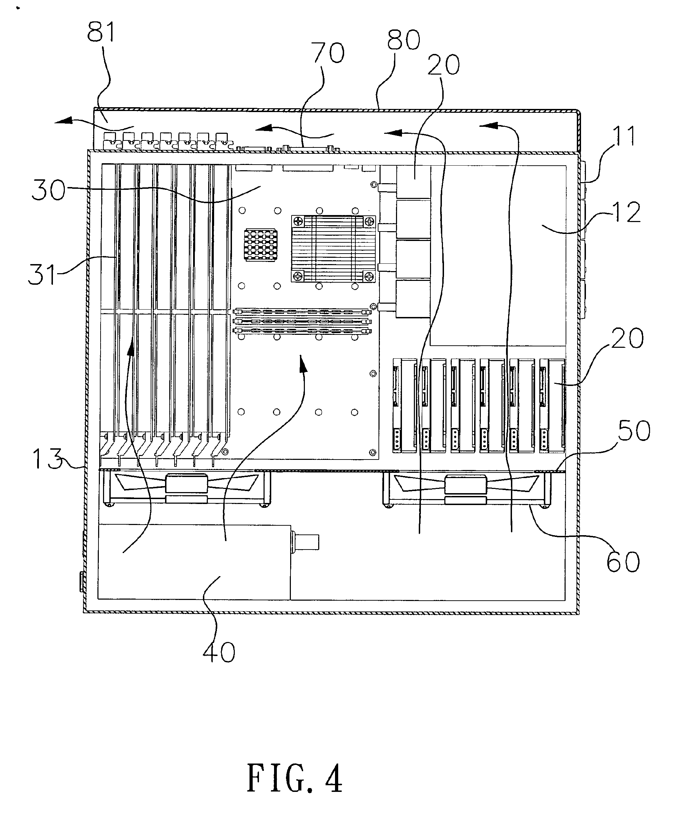

In FIG. 4, if the fan 60 starts operating, the fan 60 will suck outside cold air directly from a crevice proximate to the bottom of the housing 10, such that the cold air with a lower temperature at the bottom is blown in a single direction directly at the heat generating components, the interface cards 31 and the storage devices 20 (by means of a positive wind pressure difference), so as to achieve the effects of preventing dusts from entering into the housing 10 from other crevices and extending the life of components. After the cold air entering into the housing 10 flows through the heat generating components, interface cards 31 and storage devices 20, the air flows from other crevices and openings 81 of the housing 10 to the outside to assure a smooth convection and enhance the heat dissipating effect.

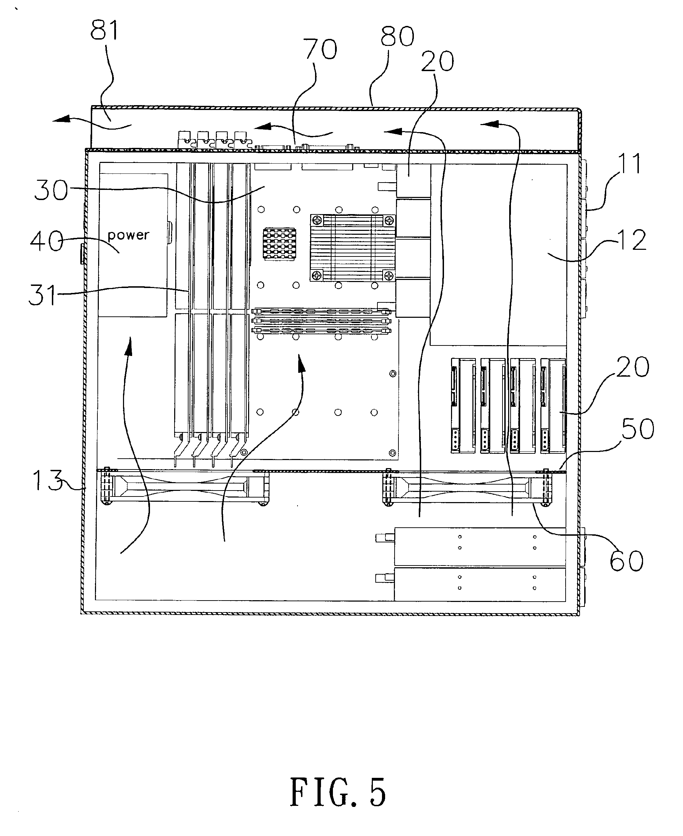

In FIG. 5, the apparatus includes a housing 10 which is a tower desktop computer in this embodiment, a front panel 11 disposed on a front side of the housing 10, a frame body 12 installed in the housing 10 and disposed proximate to the front panel 11, a storage device 20 which is a hard disk or an optical disk drive in this embodiment and installed in the frame body 12, a rear panel 13 on a rear side of the housing 10, a motherboard 30 installed on a lateral side of the housing 10 and between the front panel 11 and the rear panel 13, electronic components such as a microprocessor (CPU) on the motherboard 30, and a plurality of interface cards 31 (such as display cards) installed on the motherboard 30 and parallel to the front panel 11. The housing 10 has a power supply device 40 installed at a position away from the standing position and proximate to the rear panel 13, and a fixing frame 50 installed at a position opposite to the motherboard 30 and the storage device 20, and fixed in the housing 10 by welding, locking or insertion. The fixing frame 50 has at least one fan 60, and this embodiment installs two fans 60 side by side, such that the airflow direction of the fan 60 is parallel to the direction of arranging the interface cards 31. The housing 10 has an external port 70 disposed on a corresponding surface away from the vertical standing position (which is the top of the housing in this embodiment) and protruded and exposed from the housing 10 and a hood 80 is covered thereon, and a passage is formed between the hood 80 and the housing 10, and an end of the hood 80 has an opening 81.

When the fan 60 starts operating, the fan 60 sucks outside cold air through the crevice at the bottom of the housing 10, so that the cold air with a lower temperature at the bottom is blown directly at the heat generating components and the storage devices 20 (by means of a positive wind pressure difference), so as to achieve the effects of preventing dusts from entering the housing 10 through other crevices and extending the life of components. After the cold air entering into the housing 10 flows through the heat generating component, interface card 31 and two storage devices 20, the air flows to the outside through other crevices and openings 81 of the housing 10 to assure a smooth convection and enhance the heat dissipating effect.

In summation of the description above, the present invention can enhance the heat dissipation effect of the computer and overcome the shortcomings of the prior art, and thus the invention complies with the requirements of the patent application, and is duly filed for patent application.

While the invention has been described by way of examples and in terms of preferred embodiments, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

## Claims

1. A heat dissipating apparatus of a computer, applied in a tower computer, and the apparatus comprising:
a housing, having a front panel and a rear panel disposed at a front side and a rear side of the housing respectively, and a motherboard installed on a lateral side of the housing and between the front panel and the rear panel, and the motherboard having a plurality of parallel interface cards, a frame body installed at the motherboard and proximate to the front panel, and a storage device installed on the frame body;
a fixing frame, installed in the housing, and at a position opposite to the motherboard and the storage device;
at least one fan, installed on the fixing frame, and having an airflow direction parallel to the direction of arranging the interface cards;
thereby, the rotation of the fan draws outside cold air into the housing from a crevice at the bottom of the housing, so that the cold air blows directly at a heat generating position to enhance the heat dissipating effect.

2. The heat dissipating apparatus of a computer as recited in claim 1, wherein the fan comes with a quantity of two.

3. The heat dissipating apparatus of a computer as recited in claim 1, wherein the housing includes an external port disposed on a corresponding side away from the standing position and protruded and exposed from the housing, a hood covered onto the housing, a passage formed between the hood and the housing, and an opening disposed on an end of the hood, and thus the housing not only facilitates users to install and remove the external port and protects the external port by the hood, but also guides the airflow in the housing by the passage to flow to the outside through the opening.

4. The heat dissipating apparatus of a computer as recited in claim 1, wherein the housing further includes a power supply device installed at the bottom of the fixing frame and proximate to the vertical standing position of the housing.

5. The heat dissipating apparatus of a computer as recited in claim 1, wherein the housing further includes a power supply device installed at the top of the fixing frame and away from the standing position of the housing.
